# EUROPEAN PATENT APPLICATION

(11) **EP 1 059 249 A1**
(43) Date of publication of application: **13.12.2000**
(21) Application number: 00109961.3
(22) Date of filing: 11.05.2000
(51) Int. Cl.: B65G 45/22, B05B 15/04

(54) **Device for cleaning a conveyor belt of liquid substances sprayed thereon**

(30) Priority: 11.06.1999 IT MI991311
(71) Applicant: ELMAG S.p.A., 20052 Monza, Milano (IT)
(72) Inventor: Tropeano, Dario, Ing., 20121 Milano (IT)
(74) Representative: Giambrocono, Alfonso, Dr. Ing.

(57) **Abstract**

The device for cleaning a flexible annular belt (10), mounted taut about at least two rollers (22, 24; 122, 123, 124), of which at least one (24; 124) is motorized. The belt conveys articles (16; 116) through a spraying station (12, 14; 112, 114) in which they are sprayed with liquid substances. The cleaning device comprises cleaning means (26; 126) including: a wetting roller (28; 128) parallel to the rollers (22, 24; 122, 123, 124) about which the belt (10; 110) is mounted, this roller (28; 128) making contact with the outer surface of a return branch (20; 120) of the belt (10; 110) to wet this surface with a cleaning liquid (30; 130); and one (34; 134) or more doctor blades which make contact with a return branch (20; 120) of the belt (10; 110) to mechanically remove from the outer surface of the belt (10; 110) the substance sprayed onto it, the doctor blades (34; 134) being positioned downstream, with reference to the belt movement direction, of the wetting roller (28; 128) and being fixed in the direction of movement of the relative return branch (20; 120) of the belt (10; 110).

## Description

This invention relates to a device for cleaning a flexible annular belt, mounted taut about at least two rollers, of which at least one is motorized, the belt conveying articles through a spraying station in which they are sprayed with liquid substances such as coating material, oil and the like. Hence before receiving further articles the belt has to be cleaned of said liquid substances deposited on it.

Conveyor belts of this type have been known for a considerable time and comprise two or more branches, of which at least the outward branch is horizontal and carries the articles which, on reaching the spraying station, are sprayed with said substances by known spraying devices. The other branch or branches of the belt, namely the return branches, lie below the outward branch.

As a consequence of the spraying operation at least part of the belt becomes soiled with that fraction of the sprayed liquid substance which does not deposit on the articles carried by the belt but which instead deposits on the outward branch of the belt.

MI97A 002618, in the name of the present applicant, describes a cleaning device which enables the outer surface of the belt to be cleaned before it receives new articles to be sprayed, this device comprising:
- a wetting roller parallel to the rollers about which the belt is mounted. this roller making contact with the outer surface of the belt return branch and having a peripheral speed equal to and in the same direction as that of the belt, the wetting roller wetting the belt surface with a cleaning liquid which facilitates subsequent mechanical removal from this surface of the liquid substance sprayed onto the belt;
- a series of elastically flexible doctor blades extending outwards from a motorized rotary element having its axis of rotation parallel to that of the belt rollers and its direction of rotation the same as these latter, at least one flexible doctor blade being always in contact with the outer surface of the belt return branch in a position downstream (with reference to the movement of the return branch) of the wetting roller; and
- a mechanical means for cleaning the flexible doctor blades of the substance which they remove from the belt.

The use of the aforedescribed cleaning device has brought certain drawbacks to light. In particular, especially if the sprayed liquid is coating material, it has been found that although the mechanical means is provided to clean the flexible doctor blades (this being in practice a rigid blade which interferes with the flexible doctor blades to remove the coating material from them), with the passage of time dry coating material accumulates in proximity to the root of the flexible doctor blades, and this has periodically to be removed in order not to compromise proper operation of the cleaning device. For this, the rotary element carrying the flexible doctor blades has to be removed. Moreover, removing dry coating material from the root of the doctor blades and from the relative rotary element is evidently not easy, and as this has to be done manually it requires considerable time, so increasing production costs.

This invention proposes to provide a cleaning device for conveyor belts of the aforesaid type in which the aforesaid drawbacks are eliminated or are significantly reduced.

This object is attained by the cleaning device of the invention, comprising cleaning means including a wetting roller parallel to the rollers about which the belt is mounted, said roller making contact with the outer surface of the belt return branch to wet this surface with a cleaning liquid,
characterised in that the cleaning means comprise one or more doctor blades which make contact with a return branch of the belt to mechanically remove from the outer surface of the belt the substance sprayed onto it, the doctor blades being positioned downstream, with reference to the belt movement direction, of the wetting roller and being fixed in the direction of movement of the relative return branch of the belt.

Although said doctor blades are fixed in the direction of movement of the relative return branch of the belt, they are not fixed in the direction perpendicular to this movement and parallel to the return branch) one or more of the doctor blades being able to oscillate in this latter direction. Moreover, the doctor blades are not necessarily rectilinear, but can for example be arched or of V shape in the direction transverse to the belt.

The said doctor blade or doctor blades are much less soiled than the flexible doctor blades of MI97A 002618 and are hence much more easily cleaned.

From tests carried out it has been found that it is convenient to make the wetting roller selectively rotatable, depending on the type of liquid substance sprayed onto the belt, either in the same direction of rotation as the rollers about which the belt is mounted or in the opposite direction, preferably with adjustable rotational speed. It has in fact been found that, depending on the type of sprayed liquid substance or indeed on the type of coating material, better results are obtained if the wetting roller rotates in one direction rather than the other, and if this roller is rotated at a suitable speed. It is evident that if the peripheral speed of rotation of the wetting roller, assuming that it rotates in the same direction as the belt rollers, is different from the belt speed, the wetting roller will be subjected to greater wear than the wetting roller of MI97A 002618 (in which the wetting roller rotates in the opposite direction to the belt rollers and the peripheral speed of the wetting roller is equal to the belt speed). Greater wear also occurs if the wetting roller rotates in the opposite direction to the belt rollers.

To obtain more thorough cleaning of the belt, the cleaning device of the invention can comprise, downstream of the aforedescribed cleaning means, one or more additional cleaning means which can be of the same type as those just described or can be of other known types, such as a cleaning means of rotary brush type, possibly wetted with a liquid which facilitates the mechanical action of the brush.

The cleaning liquid can be an appropriate solvent, even water if suitable and, if the sprayed liquid substance is coating material, the coating material itself can be used possibly with a suitable added solvent.

The invention will be more apparent from the ensuing description of some embodiments thereof. In this description reference is made to the accompanying drawings, on which:
Figure 1 is a side elevation of a conveyor belt of the two parallel branch type, by which panels to be sprayed are conveyed through a spraying station, the conveyor belt being provided with a cleaning device of the invention;
Figure 2 is a partial side elevation of the same conveyor belt, but provided with a variant of the cleaning device of Figure 1;
Figure 3 shows a further variant of the cleaning device;
Figure 4 shows a further variant; and
Figure 5 is a side elevation of a conveyor belt of triangular configuration, provided with a cleaning device of the invention suitable for application to the vertical branch of the belt.

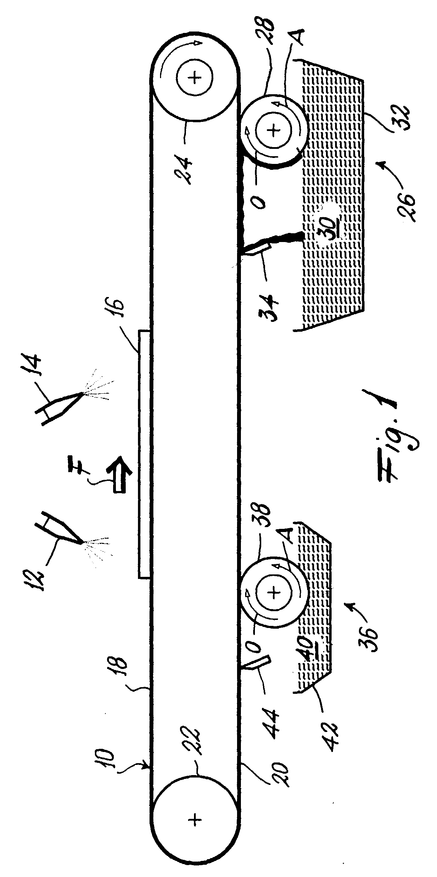

As can be seen from Figure 1, the conveyor belt 10 conveys articles (in this specific case a panel 16) in the direction of the arrow F, below a spraying station (indicated schematically by the spray nozzles 12 and 14). The belt 10 is mounted taut about two rollers 22 and 24 of the same diameter, so obtaining two parallel branches, namely an upper (or outward) branch 18 and a lower (or return) branch 20.

As the sprays leaving the spray nozzles 12 and 14 strike not only the surface of the panel 16 but also the adjacent surface of the belt 10, cleaning means 26 are provided. These comprise a wetting roller 28 which can be rotated about its horizontal axis parallel to the axis of rotation of the belt rollers 22 and 24. The wetting roller 28 can be rotated in either of the two directions at choice (in Figure 1 the clockwise rotation direction being indicated by O and the anticlockwise by A) and at the required speed. If the wetting roller rotates for example in the direction indicated by O, then as the wetting roller 28 dips into the cleaning liquid 30 (of the aforestated type) contained in the tank 32, downstream of the wetting roller 28 the surface of the lower branch 20 of the belt 10 remains wetted with the cleaning liquid deposited on it by the wetting roller 28 (as shown in Figure 1).

The cleaning means 26 also comprise a doctor blade 34 (however more than one could be provided arranged in succession) to recover the cleaning liquid deposited on the belt 10 by the wetting roller 28 and simultaneously to clean the belt 10 of the liquid substance sprayed onto it, all the liquid falling into the tank 32, as shown in Figure 1.

If the liquid substance sprayed by the nozzles 12 and 14 is coating material, it has been found convenient to use the actual coating material, possibly with the addition of a solvent, for the cleaning liquid 30 to be fed into the tank 32. This enables the sprayed coating material which has deposited on the belt 10 to be recovered and possibly recycled. For this purpose the tank 32 can be provided with an overflow, the coating material flowing over the overflow being returned to the nozzles 12 and 14. In this manner there is no waste coating material to be disposed of, this being of considerable ecological advantage.

As already stated, the direction of rotation of the wetting roller 28 and its speed are chosen on the basis of the type of liquid substance sprayed onto the belt by the nozzles 12 and 14. If only one application of cleaning liquid 30 is needed to achieve the required belt cleaning by the doctor blade 34, the wetting roller 28 is rotated in the opposite direction to the rollers 22 and 24 at a peripheral speed equal to the speed of the belt 10. This results in minimum wear of the wetting roller 28. For certain types of coating material it is however convenient for the wetting roller 28 to also exert a mechanical action on the belt surface. In this case the wetting roller 28 can be either rotated in the same direction of rotation (O) as the rollers 22 and 24 but at a different speed from the belt 10, or rotated in the opposite direction (A) to the rollers 22 and 24.

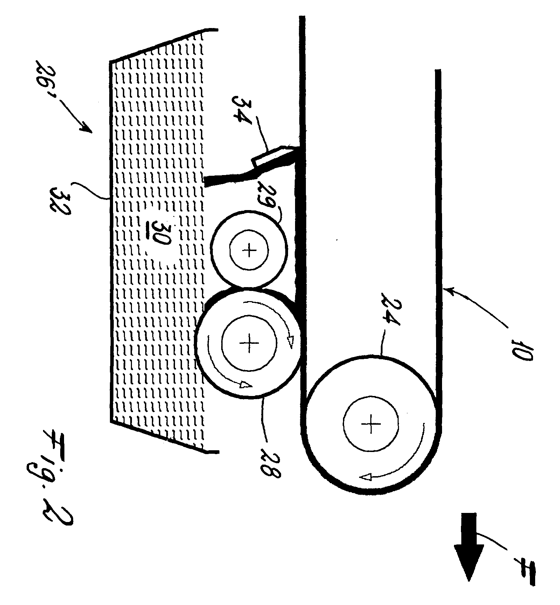

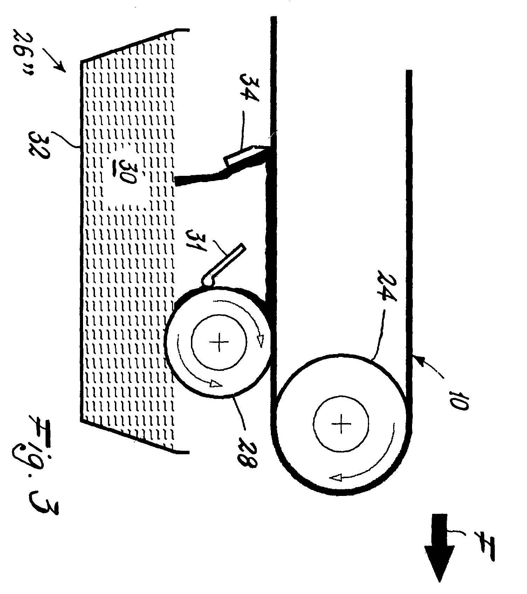

In those variants of the cleaning device of the invention shown in Figures 2 and 3, the wetting roller 28 is provided with a wetting liquid dispensing means, 26' and 26'' respectively, which in the case of the cleaning means 26' consists of a dispensing roller 29 (Figure 2) at a distance from the roller 28 which is adjustable to enable the quantity of liquid 30 picked up by the wetting roller 28 from the tank 32 to be reduced, and in the case of the cleaning means 26'' consists of a dispensing doctor blade 31 (Figure 3) performing the same function as the dispensing roller 29. The remainder of the cleaning means 26' and 26'' is identical to the cleaning means 26 of Figure 1.

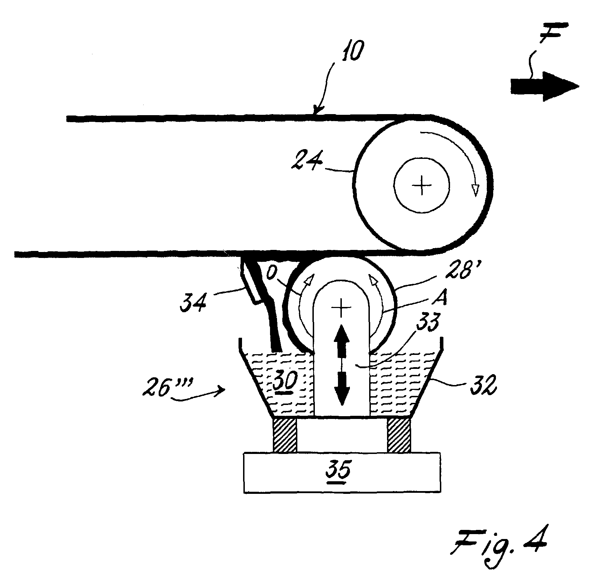

In the variant of Figure 4 the level of the wetting roller 28' of the cleaning means 26''' is adjustable. In this respect, the roller 28' is rotatably supported by two end support elements, of which only one, indicated by 33, can be seen in Figure 4. The two support elements 33 rest on the base of the tank 32, this latter being supported by conventional means 35 enabling its level to be slightly varied, with consequent variation in the extent of the contact region between the wetting roller 28' and belt 10, and hence in the mechanical action exerted by the wetting roller 28' on the belt 10. The remainder of the cleaning means 26''' is identical to those of Figure 1.

As already stated, the cleaning device of the invention can also comprise one or more additional means positioned downstream of the cleaning means 26. In particular, as can be seen in Figure 1, the additional cleaning means 36 are substantially identical to the cleaning means 26 and consist of a wetting roller 38 which dips into the cleaning liquid 40 contained in the tank 42. A doctor blade 44 removes from the belt surface any cleaning liquid deposited by the wetting roller 38 and mechanically cleans the belt 10. For some types of liquid substance sprayed by the nozzles 12 and 14 it can be convenient to replace the wetting roller 38 with a rotary cylindrical brush (not shown) located in the same position as the wetting roller and dipping into the cleaning liquid 40.

For certain liquid substances sprayed by the nozzles 12 and 14 it can be convenient to provide a doctor blade (not shown) for cleaning the wetting roller 28, this doctor blade being positioned downstream (with reference to the direction of rotation of the wetting roller 28) of the point of contact between the wetting roller 28 and the return branch 20 of the belt 10.

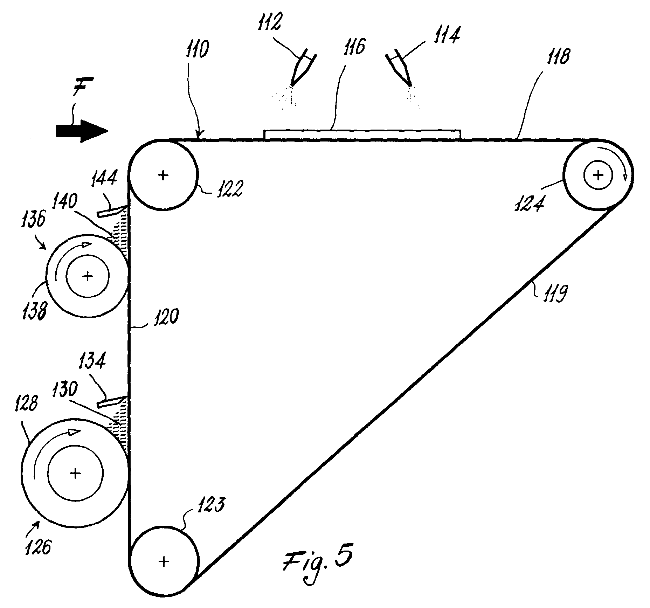

Figure 5 shows a conveyor belt 110 with three branches, namely a horizontal outward branch 118 on which the articles 116 rest and advance (in the direction of the arrow F), to be sprayed with a liquid substance (for example coating material) emitted by the spray nozzles 112 and 114. The belt 110 also has an inclined first return branch 119 and a vertical second return branch 120. In this case the cleaning device comprises cleaning means 126 comprising a wetting roller 128 which in this specific case rotates in the same direction as the rollers 122, 123, 124 about which the belt 110 is mounted and makes contact with the vertical return branch 120. When a liquid of the same type as the cleaning liquid 30 of the preceding figures is fed onto the contact region between the wetting roller 128 and the vertical branch 120, the corresponding parts of the surface of the wetting roller 128 and of the outer surface of the vertical branch 120 of the belt 110 act as a vessel to contain the liquid 130. A relative side wall is provided at each end of the wetting roller 128 to laterally retain the cleaning liquid 130.

A doctor blade 134 (or more than one doctor blade) recovers the cleaning liquid deposited on the surface of the wetting roller 128 and simultaneously cleans the belt 110 of the liquid substance sprayed onto the belt.

In the case of Figure 5 additional cleaning means 136 are provided also consisting of a wetting roller 138 and a doctor blade 144. A cleaning liquid 140, of the same type as the liquid 40 of Figure 1, is fed between the wetting roller 138 and the vertical branch 120 of the belt 110, above their contact region.

The surface of the wetting rollers (28, 38; 128, 138) is preferably porous, a porous and, in the limit, soft surface having proved more effective for the required purpose than a smooth rigid surface.

As already stated, the doctor blades (34, 44; 134, 144) are fixed in the direction of movement of the relative return branch (20; 120) of the belt (10; 110). However they can be of a type able to oscillate in a direction transverse to the belt (perpendicular to the drawings). The doctor blades are not necessarily rectilinear, but can for example be arched or of V shape in the direction of their extension (transverse to the belt).

## Claims

1. A device for cleaning a flexible annular belt (10; 110), mounted taut about at least two rollers (22, 24; 122, 123, 124), of which at least one (24; 124) is motorized, the belt conveying articles (16; 116) through a spraying station (12, 14; 112, 114) in which they are sprayed with liquid substances, the device comprising cleaning means (24; 126) including a wetting roller (28; 128) parallel to the rollers (22, 24; 122, 123, 124) about which the belt (10; 110) is mounted, said roller (28; 128) making contact with the outer surface of the belt return branch (20; 120) to wet this surface with a cleaning liquid (30; 130),
characterised in that the cleaning means (26; 126) comprise one (34; 134) or more doctor blades which make contact with a return branch (20; 120) of the belt (10; 110) to mechanically remove from the outer surface of the belt (10; 110) the substance sprayed onto it, the doctor blades (34; 134) being positioned downstream, with reference to the belt movement direction, of the wetting roller (28; 128) and being fixed in the direction of movement of the relative return branch (20; 120) of the belt (10; 110).

2. A cleaning device as claimed in claim 1, wherein the sprayed liquid substance (30; 130) is coating material and the cleaning liquid is the coating material itself.

3. A cleaning device as claimed in claim 1, wherein the doctor blade (34; 134) or doctor blades can oscillate in a direction perpendicular to the movement of the relative belt return branch (20; 120) and parallel to the belt (10; 110).

4. A cleaning device as claimed in claim 2, wherein a solvent is added to the constituent coating material of the cleaning liquid (30; 130).

5. A cleaning device as claimed in claim 1, wherein additional cleaning means (36; 136) are provided.

6. A cleaning device as claimed in claim 5, wherein the additional cleaning means (36; 136) are identical to the cleaning means (26; 126).

7. A cleaning device as claimed in claim 5, wherein the additional cleaning means (36; 136) are of known type.

8. A cleaning device as claimed in claim 1, wherein the cleaning means (26; 126) comprise a wetting roller (28; 128)

9. A cleaning device as claimed in claim 8, wherein the wetting roller (28) dips into a tank (32) containing the cleaning liquid (30).

10. A cleaning device as claimed in claim 8, for a conveyor belt (110) with three branches (118, 119, 120), one (120) of which is a vertical return branch, wherein the cleaning means (126) are positioned in correspondence with the vertical branch (120) of the belt (110), the cleaning liquid (130) being fed above the contact region between the wetting roller (128) and the vertical branch (120) of the belt (110).

11. A cleaning device as claimed in claim 8, wherin a doctor blade (34; 134) is provided for cleaning the wetting roller (28; 128).

12. A cleaning device as claimed in claim 8, wherin the wetting roller (28; 128) is movable in a direction perpendicular to the relative return branch (20; 120) of the belt (10; 110) to increase or decrease the extent of the contact region between the wetting roller (28; 128) and the belt (10; 110).

13. A cleaning device as claimed in claim 8, wherin the wetting roller (28; 128) has a porous surface.

14. A cleaning device as claimed in claim 8, wherin the wetting roller (28; 128) has a soft surface.

15. A cleaning device as claimed in claim 1, wherin the doctor blade (34; 134) or doctor blades are of arched or V-shaped extension in the direction perpendicular to the belt (10; 110).
